# FASCICULE DE BREVET EUROPEEN

(11) **EP 2 300 532 B1**
(45) Date de publication et mention de la délivrance du brevet: **09.11.2022**
(21) Numéro de dépôt: 09772901.6
(22) Date de dépôt: 02.07.2009
(51) Int. Cl.: C08L 27/06

(54) **COMPOSITION IGNIFUGEE A BASE DE PVC**
FLAMMWIDRIGE ZUSAMMENSETZUNG AUF BASIS VON PVC
PVC-BASED FLAME-RETARDANT COMPOSITION

(30) Priorité: 02.07.2008 FR 0854490; 02.07.2008 US 129536 P
(43) Date de publication de la demande: 30.03.2011
(73) Titulaire: Porcher Industries, 38300 Badinières (FR)
(72) Inventeur: CONESA, Isabelle, 38460 Saint-Romain-de-Jalionas (FR)
(74) Mandataire: Lavoix
(86) Numéro de dépôt international: PCT/IB2009/006147
(87) Numéro de publication internationale: WO 2010/001240

(56) Documents cités:
- EP-A- 0 296 988
- EP-B- 0 900 294
- WO-A-91/01348
- US-A- 3 718 615
- US-A- 4 111 885
- US-A- 5 227 417
- US-A- 6 087 428
- US-B1- 6 534 577

## Description

La présente invention concerne une composition ignifugeante **,** telle que définie dans les revendications, à base de plastisol PVC entrant dans la composition de structures textiles techniques utilisables dans l'industrie du bâtiment, et son application entre autre pour la fabrication de fils destinés au tissage des stores de protection solaire.

De tels textiles sont soumis à des réglementations et/ou procédures d'homologation nationales ou internationales définissant leur comportement au feu tant en termes d'inflammabilité qu'en termes d'émission de fumées, ce comportement au feu étant directement dépendant de leur teneur en matière organique.

Les fils techniques, sont constitués d'une âme comportant un fil continu, notamment en matériau inorganique comme le verre, ou organique comme le polyamide, l'alcool de polyvinyle, et une gaine ou enveloppe comportant une matrice, constituée par au moins un matériau polymère, une charge minérale ignifugeante incorporée et distribuée dans la matrice et un plastifiant. De tels fils sont obtenus, par enduction en une ou deux couches, de l'âme avec un plastisol comprenant le matériau polymère, la charge minérale ignifugeante et le plastifiant, puis par gélification du plastisol autour de l'âme.

Fréquemment, le polymère constitutif de la matrice est un matériau polymère chloré, par exemple un polychlorure de vinyle (PVC).

De nombreuses solutions ont été proposées, pour améliorer le comportement au feu de matrices dans lesquelles une charge ignifugeante est incorporée.

Ainsi, par exemple, on connaît de JP-A-58 18 56 37, pour une matrice à base de PVC et de chlorure de polyéthylène pour la fabrication de câbles, une charge ignifugeante comprenant un composé choisi parmi les oxydes et/ou hydroxydes d'antimoine et d'aluminium et préférentiellement un autre composé choisi parmi les sels de zinc dont le borate de zinc, et des produits à base d'étain, comme par exemple le stannate d'étain.

On connaît également de FR 2 448 554, une matrice à base de PVC pour le gainage de câbles incorporant un stabilisant et un plastifiant constitué par un éther phosphorique, une charge d'hydroxyde d'alumine et une charge ignifugeante complémentaire composée d'oxydes d'antimoine éventuellement associés à un borate de zinc.

On connaît également de US 6 087 428, des compositions à base de PVC, destinées à la fabrication de matériaux d'isolation pour les câbles, caractérisées en ce qu'elles comportent un plastifiant polymérique, du carbonate de magnésium, du trihydrate d'aluminium et de l'hydroxystannate de zinc et éventuellement du trioxyde d'antimoine. Il est précisé que les propriétés de retard de flamme de la composition PVC sont améliorées par l'ajout de trioxyde d'antimoine, l'exemple de mise en œuvre de ce brevet contient notamment du trioxyde d'antimoine. Ce document ne divulgue pas de réaliser une composition ignifugeante ayant de bonnes propriétés de retard de flamme sans ajout d'antimoine.

On connaît de EP 900 294, un fil, dont la gaine est constituée d'une matrice à base de PVC dont la charge ignifugeante comprend une composition ternaire associant un oxyde d'antimoine et un oxyde métallique hydraté. Le PVC constitutif de ladite matrice comporte en outre un plastifiant comportant au moins un orthophtalate organique.

On connaît enfin de WO91/01348 une formulation polymère retard de flamme comprenant une combinaison synergique de retardeurs de flamme comprenant de l'hydroxyde de magnésium ou d'aluminium et un oxyde d'étain ou un stannate ou hydroxystannate. Cette formulation comprend un plastifiant orthophtalate (reomol DOP).

Ces compositions sont particulièrement performantes s'agissant de leur comportement au feu, cependant, l'antimoine peut comporter des traces de métaux lourds comme le plomb, et le trioxyde d'antimoine est classé dans la catégorie 3 comme substance préoccupante pour l'homme en raison d'effets cancérigènes possibles en Europe (JOCE, 1994).

Le PVC est également largement critiqué en raison de l'emploi des plastifiants phtalates entrant classiquement dans sa composition afin d'améliorer ses caractéristiques mécaniques (souplesse). Ces phtalates en vieillissant sous l'effet des rayonnements ultraviolets migrent en surface des objets souples en PVC et peuvent devenir une source de contamination.

On connaît de US5,227,417 des compositions comprenant une résine PVC, au moins un plastifiant, au moins un retardeur de flamme, au moins deux suppresseurs de fumée qui interagissent de façon synergique et un stabilisateur de chaleur. Le plastifiant est au moins un système plastifiant double composants, le premier plastifiant est à base d'ester de phosphate et le second plastifiant est un ester aromatique bromé. Le retardeur de flamme est un trihydrate d'alumine, le système suppresseur de fumée est un mélange d'octamolybdate d'ammonium et d'un composé de zinc (molybdate, borate, oxyde, phosphate...) et le stabilisateur de chaleur est à base de plomb. Cette composition présente des métaux lourds (plomb) toxique.

Ce brevet présente également des exemples (4 et 5) où la composition ne comprend que des plastifiants phosphates, cependant le tableau colonne 4 montre que ces formulations donnent de moins bons résultats et notamment l'indice d'oxygène est plus faible que pour les formulations comprenant un mélange de plastifiant phosphate et phtalate. De plus ces formulations contiennent des sels de plomb toxiques.

On connait enfin de US4,272,427 une composition comprenant un plastifiant phosphate et/ou phtalate et des suppresseurs de fumée de type carbonate de zinc et carbonate de magnésium. Cette composition ne comprend cependant pas de retardeur de flamme. EP 0296988, US 6534577 et US 4111885 décrivent des composés de plastisol ignifugées et leurs applications à la fabrication de fibres textiles.

EP 296 988 décrit un plastisol PVC ignifugé contenant des plastifiants phosphorés ou halogénés ainsi que des charges ignifugeantes minérales, dont des oxydes d'antimoine, du trihydrate d'alumine, de l'oxyde de zinc ou de magnésium. US 6,534,577 décrit un plastisol PVC pour l'enduction de fils, avec un objectif de remplacement des plastifiants de la famille des phtalates par des citrates. Il ne s'intéresse pas particulièrement aux charges ignifugeantes. Il prévoit seulement qu'il puisse y en avoir et se contente de signaler que l'hydroxyde d'aluminium et l'hydroxyde de magnésium sont particulièrement appropriés. Il ajoute qu'il est aussi possible d'utiliser d'autres charges ignifugeantes conventionnelles, telles que par exemple le trioxyde d'antimoine. D2 précise que les hydrates métalliques comme l'hydroxyde d'aluminium ou de magnésium ne représentent pas une solution alternative de remplacement satisfaisante à l'antimoine en tant que retardateurs de flammes, étant donné qu'ils doivent être utilisés à des teneurs élevées, entraînant ainsi une détérioration des propriétés physiques d'une composition à base de PVC. US 4,111,885 décrit un plastisol PVC comprenant un ester aliphatique d'acide carboxylique en tant que plastifiant et un système ignifugeant complexe comprenant cumulativement de l'acide borique et un composé choisi parmi le borate ou l'oxyde de zinc.

Il est donc important de trouver des alternatives à l'utilisation d'antimoine et de plomb et de réduire, voire de supprimer les orthophtalates dans les compositions à base de PVC, tout en conservant les propriétés vis-à-vis du comportement au feu mais également les propriétés rhéologiques.

Un des objets de l'invention , tel que défini dans les revendications, est un plastisol ignifugé comprenant un matériau polymère chloré exempt de plomb, tel que défini dans les revendications. Il est décrit un plastisol ignifugé exempt d'orthophtalate, d'antimoine et de plomb, caractérisé en ce qu'il comprend au moins :
- de 15 à 60 % d'un matériau polymère chloré,
- de 10 à 30 % d'un plastifiant consistant en un ou un mélange de plastifiant non polymérique ,
- une charge ignifugeante exempte d'antimoine comprenant de 2 à 15 % d'hydrate métallique choisi parmi le trihydrate d'alumine et l'hydroxyde de magnésium, seuls ou en mélanges, et/ou de 5 à 30 % de sel de zinc, les pourcentages étant calculés par rapport au poids total du plastisol.

Par matériau chloré on peut utiliser conformément à l'invention, toute résine PVC susceptible d'être plastifiée, et notamment pouvant être de ce fait mise en œuvre sous forme de plastisol.

Par matériau polymère chloré on entend, ou un polymère chloré pur ou un copolymère de chlorure de vinyle copolymérisé avec d'autres monomères, ou encore un polymère chloré qui est allié avec d'autres polymères.

Parmi les monomères qui peuvent être copolymérisés avec le chlorure de vinyle, on citera notamment des oléfines comme par exemple l'éthylène, des esters vinyliques, d'acides carboxyliques saturés, comme l'acétate de vinyle, le butyrate de vinyle ou les maléates, des dérivés vinyliques halogénés comme par exemple, le chlorure de vinyldène, des esters d'acide acryliques ou métacrylique comme l'acrylate de butyle.

A titre de polymère chloré, on citera par exemple le polychlorure de vinyle mais aussi les PVC surchlorés, les polychlorures de vinylidène et les polyoléfines chlorées.

Dans un mode de réalisation le matériau polymère chloré selon la présente invention a une teneur pondérale en halogène comprise entre 40 et 70 %.

On entend par plastifiant polymérique un plastifiant initialement sous forme polymère.

On entend par antimoine, tout sel d'antimoine et plus particulièrement les oxydes et hydroxydes d'antimoine.

On entend par plomb, tout sel de plomb et plus particulièrement les sels de plomb utilisés comme stabilisateur de chaleur, par exemple les sulfates de plomb.

On entend par phtalate les esters de la forme isomérique ortho de l'acide benzène dicarboxylique, l'acide phtalique, cette dénomination n'est pas applicable aux isomères méta et para de l'acide benzène dicarboxylique. Cette forme isomérique ortho est métabolisée en monoester, responsable des processus toxicologiques observés sur les organismes vivants. Les autres isomères des esters de l'acide benzène dicarboxylique (méta et para) ne sont pas métabolisés en monoester et ne présentent donc pas d'activité toxicologique. Les méta- et paraphtalate peuvent donc être utilisés sans risque toxicologique dans les formulations de plastisol.

L'invention concerne également ledit plastisol caractérisé en ce que l'agent plastifiant est choisi dans le groupe constitué par les esters d'acides aliphatiques dicarboxyliques, les esters d'acides 1,4-benzène dicarboxyliques, les benzoates, les phosphates, les trimellitates et les méta- et/ou paraphtalates (téréphtalate) seuls ou en mélange.

Dans un mode de réalisation le plastisol est caractérisé en ce que l'agent plastifiant est choisi dans le groupe des esters d'acides aliphatiques dicarboxyliques.

Dans un mode de réalisation les esters d'acides aliphatiques dicarboxyliques sont choisis parmi les esters cyclooctyle dicarboxyliques et notamment le diisononyl-1,2-cyclohexanedicarboxylate et ses dérivés, les esters de l'acide adipique et notamment le di-(2-éthylhexyl)-adipate, les esters de l'acide citrique et notamment le tri-(2-éthylhexyl)-citrate, les esters de type sébaçates comme le di-(2-éthylhexyl)-sébaçate et les azélates comme le di-(2-éthylhexyl)-azélate.

Dans un mode de réalisation le plastisol est caractérisé en ce que l'agent plastifiant est choisi dans le groupe des esters 1,4-benzène dicarboxyliques.

Dans un mode de réalisation les esters 1,4-benzène dicarboxyliques sont choisis dans le groupe constitué par les esters d'acides 1,4-benzène dicarboxyliques comme le bis(2-éthylhexyl)-1,4-benzène dicarboxylate.

Dans un mode de réalisation le plastisol est caractérisé en ce que l'agent plastifiant est choisi dans le groupe des benzoates.

Dans un mode de réalisation les benzoates sont choisis dans le groupe constitué par le dipropylène glycoldibenzoate, le déthylèneglycoldibenzoate l'éthyl hexylmonobenzoate, le texanol benzoate, le glycol benzoate, et le propylene glycol dibenzoate.

Dans un mode de réalisation le plastisol est caractérisé en ce que l'agent plastifiant est choisi dans le groupe des phosphates.

Dans un mode de réalisation, les phosphates sont choisis dans le groupe constitué par le 2-éthylhexyl diphényl phosphate, l'isodécyl diphényl phosphate, le mélange de dodécyl et tetradécyl diphényl phosphate, le trioctyl phosphate, le tributyl phosphate, le butylphényl diphényl phosphate et l'isopropyl triphényl phosphate.

Dans un mode de réalisation le plastisol est caractérisé en ce que l'agent plastifiant est choisi dans le groupe des triméllitates.

Dans un mode de réalisation, les trimellitates sont choisis dans le groupe constitué par le trioctyl trimellitate, le tri-(2-éthylhexyl) trimellitate et le tri-(heptyl,nonyl) trimellitate.

Dans un mode de réalisation le plastisol est caractérisé en ce que l'agent plastifiant est choisi dans le groupe des méta et/ou paraphtalates.

Dans un mode de réalisation le plastisol est caractérisé en ce que l'agent plastifiant est choisi dans le groupe constitué par le bis(2-éthylhexyl)-1,4-benzène dicarboxylate (ex : Eastman 168 de EASTMAN), le dipropylène glycoldibenzoate (ex : BENZOFLEX de VELSICOL CHEMICAL CORPORATION), le diisononyl-1,2-cyclohexanedicarboxylate (ex : HEXAMOLL DINCH de BASF), le di-(2éthylhéxyl)-adipate (ex : PLASTOMOLL DOA de BASF), le 2-éthylhexyl diphényl phosphate (ex : SANTICIZER 141 de FERRO), le trioctyl trimellitate (ex : PALATINOL TOTM de BASF) et un cyclohexane carboxylique acide (ex : DHIN de CALDIC), seuls ou en mélange.

Dans un mode de réalisation le plastisol est caractérisé en ce que l'agent plastifiant est un mélange de téréphtalates et de plastifiant phosphate.

Dans un mode de réalisation le plastisol est caractérisé en ce que l'agent plastifiant est un mélange d'esters d'acides aliphatiques dicarboxyliques et de plastifiant à base de phosphate.

Dans un mode de réalisation le plastisol est caractérisé en ce que l'agent plastifiant est un mélange de cyclohexane carboxylique acide (ex : DHIN de CALDIC) et de plastifiant à base de phosphate.

Dans un mode de réalisation le plastisol est caractérisé en ce que le plastifiant est le bis(2-éthylhexyl)-1,4-benzène dicarboxylate (ex : Eastman 168 de EASTMAN).

Dans un mode de réalisation le plastisol est caractérisé en ce que le plastifiant est un mélange cyclohexane carboxylique acide (ex : DHIN de CALDIC) et le 2-éthylhexyl diphényl phosphate (ex : SANTICIZER 141 de FERRO).

Dans un mode de réalisation le plastisol est caractérisé en ce que le plastifiant est le 2-éthylhexyl diphényl phosphate (ex : SANTICIZER 141 de FERRO)

Dans un mode de réalisation le plastisol est caractérisé en ce que le plastifiant est le diisononyl-1,2-cyclohexanedicarboxylate (ex : HEXAMOLL DINCH de BASF).

L'hydrate métallique est choisi parmi le trihydrate d'alumine et l'hydroxyde de magnésium, seuls ou en mélanges

Dans un mode de réalisation les sels de zinc sont choisis parmi les sels hydratés ou non hydratés seuls ou en mélange.

Dans un mode de réalisation, les sels de zinc sont choisis dans le groupe constitué par le stannate, l'hydroxystannate et le borate de zinc.

Dans un mode de réalisation selon l'invention le rapport pondéral entre l'hydrate métallique et le sel de zinc est d'environ 2 pour 7, de préférence 1 pour 3.

Dans un mode de réalisation, le plastisol comporte en outre au moins un agent dispersant ou agent mouillant.

Les agents mouillants ou dispersants ont pour but de faciliter l'incorporation des charges dans les compositions PVC. Parmi les agents dispersants ou mouillants on peut citer les hydrocarbures aliphatiques moyens très volatiles, les mélanges d'esters d'acides carboxyliques et composés dispersants, les esters polaires d'alcools à longue chaîne, comme ceux commercialisés par la société BYK Chemie.

Dans un mode de réalisation selon l'invention, le plastisol comprend en outre au moins un agent absorbant les ultraviolets ou agent stabilisant. Parmi les agents absorbants ou stabilisants, on peut citer, à titre d'exemple, les benzotriazoles, les benzophénones.

Dans un autre mode de réalisation selon l'invention, le plastisol peut comprendre en outre un opacifiant, par exemple à base de dioxyde de titane ou de sulfure de zinc.

Dans un mode de réalisation selon l'invention la charge ignifugeante comprenant l'hydrate métallique et le sel de zinc peut être incorporée directement dans le plastisol.

Dans un autre mode de réalisation la charge ignifugeante peut être incorporée dans le plastisol sous forme de pâte ignifugeante.

Dans ce mode de réalisation la pâte ignifugeante est constituée en ce qu'elle comprend l'hydrate métallique et le sel de zinc dans un rapport pondéral 2 pour 7, de préférence 1 pour 3.

Dans un autre mode de réalisation la pâte ignifugeante est caractérisée en ce qu'elle comprend en outre un agent dispersant ou mouillant, tel que précédemment défini.

Dans un autre mode de réalisation la pâte ignifugeante est caractérisée en ce qu'elle comprend en outre un agent plastifiant, tel que précédemment défini.

Dans un autre mode de réalisation la pâte ignifugeante est caractérisée en ce qu'elle comprend en outre un agent absorbant les ultraviolets, tel que précédemment défini.

Dans un mode de réalisation la charge ignifugeante du plastisol est constituée de 2 à 15 % d'hydrate métallique et de 5 à 30 % de sel de zinc, les pourcentages étant calculés par rapport au poids total du plastisol, où la charge ignifugeante est telle que défini précédemment et dans tous ces modes de réalisation.

Dans un mode de réalisation le plastisol de l'invention est tel que défini à la revendication 6.

Il est décrit un plastisol ignifugé exempt d'orthophtalate et de plomb caractérisé en ce qu'il comprend au moins :
- de 15 à 60 % d'un matériau polymère chloré,
- de 10 à 30 % d'un plastifiant non polymérique,
- une charge ignifugeante étant constituée de 2 à 15 % d'hydrate métallique et/ou de 5 à 30 % de sel de zinc,
les pourcentages étant calculés par rapport au poids total du plastisol, et où la charge ignifugeante est telle que défini précédemment et dans tous ces modes de réalisation.

Un autre objet de l'invention est un fil ignifugé enduit par le plastisol de la présente invention.

Le fil ignifugé enduit, selon l'invention est obtenu par filature de fibres en un matériau organique ou inorganique ou de fibres naturelles et d'un plastisol selon l'invention.

Dans un mode de réalisation, le fil ignifugé, enduit est caractérisé en ce que le matériau inorganique constitutif des fibres du fil est choisi dans le groupe constitué par le verre ou la silice.

Dans un mode de réalisation, le fil ignifugé, enduit est caractérisé en ce que le matériau organique constitutif des fibres du fil est choisi dans le groupe constitué par l'aramide ou des grades de polyester ignifugés.

L'invention concerne également un procédé de fabrication d'un fil ignifugé, enduit selon l'invention, caractérisé en ce que l'on soumet un fil continu obtenu par filature de fibres en un matériau organique ou inorganique à un procédé d'enduction par une ou deux couches, d'un plastisol selon l'invention.

Un autre objet de l'invention est une structure textile comprenant au moins un fil ignifugé enduit par le plastisol selon l'invention.

Elle concerne également une structure textile, par exemple tissu, caractérisée en ce qu'elle est susceptible d'être obtenue à partir d'au moins un fil ignifugé, enduit selon l'invention.

Un autre objet de l'invention est un écran de protection solaire comprenant au moins une structure textile fabriquée à partir de fils ignifugés, enduits par le plastisol selon l'invention.

La présente invention a aussi pour objet l'utilisation des structures textiles ainsi obtenues dans la fabrication d'écrans de protection solaire, d'écrans signalétiques, et de revêtements pour murs ou plafonds.

Un des objets de l'invention est l'utilisation pour l'enduction filamentaire, pour la fabrication de stores de protection solaire d'un tel plastisol.

Les exemples suivants permettent d'illustrer l'invention.

Par enduction d'un fil minéral/fibre de verre continue/silionne, par une préparation liquide de polymère à base de polymère chloré on obtient un fil ignifugé enduit selon l'invention.

La formulation d'enduction est définie par une viscosité comprise entre 500 et 10 000 mPa.s et de préférence entre 1000 et 5000 mPa.s, mesurée à 25°C avec un viscosimètre Brookfield RVT à 20tr/min, broche 4.

L'enduction est effectuée avec une formulation comportant les composants suivants :

| | |
|---|---|
| Résine PVC | 100 pcr |
| Résine extender ou filler | 20 à 30 pcr |
| Pâte ignifugeante composée de sel d'étain et hydrate métallique | 20 à 40 pcr |
| Plastifiant sans orthophtalate | 30 à 50 pcr |
| Additifs | 10 à 30 pcr |

Les additifs sont par exemple des diluants, des agents mouillants, des lubrifiants, des stabilisants, des opacifiants, mais également des agents anti mousse, des agents débullants, des azurants optiques, des agents d'étalement ou même des agents rhéologiques.

Pour la préparation de formulation selon l'invention, à titre d'exemple les ingrédients suivants ont été utilisés :
- Résines :
   a - Résine PVC : microsuspension
      ou émulsion, par exemple VINNOLIT P70.
   b - Résine Filler : Filler type suspension comme LACOVYL PS 1050.
- Plastifiants: Eastman 168 de EASTMAN, BENZOFLEX de VELSICOL CHEMICAL CORPORATION, HEXAMOLL DINCH de BASF, PLASTOMOLL DOA DE BASF, SANTICIZER 141 de FERRO, PALATINOL TOTM de BASF et DHIN de CALDIC.
- Charges ignifugeantes : Hydrate d'alumine comme le SH5 de OMYA, hydroxystannate de zinc de AMIK ou UNIVAR.
Formulation 1 :

| Composé | Proportion *(en* % *du poids totale de la composition)* |
|---|---|
| Résine PVC : VINNOLIT P70 | 45% |
| Résine extender ou filler : PS 1050 | 13% |
| Pâte ignifugeante | 14% |
| Plastifiant ( Eastman 168) | 19% |
| Agent diluant (EXXSOL) | 19% |
| Stabilisant thermique (UBZ 171) | 6% |

La pâte ignifugeante ayant la composition suivante :

| Composé | Proportion *(en* % *du poids totale de la composition)* |
|---|---|
| Trihydrate d'alumine SH5 | 18% |
| Hydroxystannate de zinc d'UNIVAR | 54% |
| Plastifiant ( Eastman 168) | 21% |
| Agent mouillant (BYK Disperplast I) | 7% |

La composition ainsi réalisée est appliquée sur un fil en silionne 68 tex au moyen d'une filière.

Les fils enduits avec le plastisol de l'exemple comprenant une âme silionne 68 tex enduite 165 tex, ont été tissés, ledit tissu a été testé pour sa résistance au feu suivant la norme DIN 4102-2 et la norme NF P 92503. Formulation 2 :

| Composé | Proportion *(en* % *du poids totale de la composition)* |
|---|---|
| Résine PVC : SOLVIN 372 NA | 40,6% |
| Résine filler : SOLVIN 266 SC | 17,4% |
| Pâte ignifugeante | 15% |
| Plastifiant ( DINCH de BASF) | 20% |
| Agent diluant (ISOPAR L) | 4% |
| Stabilisant thermique (Lastab S-CP 816) | 2% |

La pâte ignifugeante ayant la composition suivante :

| Composé | Proportion *(en* % *du poids totale de la composition)* |
|---|---|
| Hydroxyde de magnésium | 18% |
| Stannate de zinc | 56% |
| Plastifiant ( Eastman 168) | 21% |
| Agent mouillant (Disperplast I) | 5% |

La composition ainsi réalisée est appliquée sur un fil en silionne 33 tex au moyen d'une filière en vue d'obtenir du 97 tex. Formulation 3 :

| Composé | Proportion *(en* % *du poids totale de la composition)* |
|---|---|
| Résine PVC : | 48% |
| LACOVYL PB 1302 | |
| Résine filler : VINNOL C66W | 10% |
| Pâte ignifugeante | 12% |
| Plastifiant | |
| DHIN de CALDIC | 14% |
| Santicizer 141 | 5% |
| Agent diluant (White spirit) | 4% |
| Stabilisant thermique (Lastab CZ314) | 3% |

La pâte ignifugeante ayant la composition suivante :

| Composé | Proportion *(en* % *du poids totale de la composition)* |
|---|---|
| Trihydrate d'alumine | 18% |
| Hydroxystannate de zinc | 56% |
| Plastifiant ( Eastman 168) | 21% |
| Agent mouillant (Disperplast I) | 5% |

La composition ainsi réalisée est appliquée sur un fil en silionne 33 tex au moyen d'une filière en vue d'obtenir du 115 tex.

Un fil selon la présente invention peut être intégré dans toutes structures textiles, ou assemblé selon toutes structures textiles requises, bidimensionnelles (nappes, tissus, etc...) ou tridimensionnelles (tresses par exemple).

Le fil peut tout d'abord être coupé et divisé en fils élémentaires, pouvant être entremêlés et fixé les uns aux autres, sous forme de structures textiles non tissées, mâts par exemple. La fixation des fils élémentaires entremêlés peut être obtenue par imprégnation avec une substance adhésive appropriée, ou encore par thermo-fusion du matériau polymère de la gaine.

Le fil peut ensuite être assemblé sur lui-même, dans toutes structures textiles tricotées appropriées, mais il peut être assemblé avec d'autres fils, selon la présente invention ou non, pour constituer différentes structures bidimensionnelles ou tridimensionnelles ; dans ce dernier cas, il peut s'agir de grilles dans lesquelles les fils selon la présente invention sont entrecroisés et fixés avec d'autres fils, selon la présente invention ou non, et de tissus, dans lesquels les fils selon l'invention sont tissés avec d'autres fils de chaîne et/ou trame, également selon l'invention ou non.

Une application toute particulière de la présente invention concerne l'obtention de tissus techniques, destinés à la réalisation ou fabrication de stores ou rideaux tant intérieurs qu'extérieurs.

## Revendications

1. Plastisol ignifugé comprenant un matériau polymère chloré exempt de plomb, **caractérisé en ce qu'**il comprend au moins:
- de 15 à 60 % d'un matériau polymère chloré,
- de 10 à 30 % d'un plastifiant non polymérique exempt d'orthophtalate,
- une charge ignifugeante exempte d'antimoine comprenant de 2 à 15 % d'hydrate métallique choisi parmi le trihydrate d'alumine et l'hydroxyde de magnésium, seuls ou en mélanges, et de 5 à 30 % de sel de zinc,
les pourcentages étant calculés par rapport au poids total du plastisol.

2. Plastisol selon la revendication précédente, **caractérisé en ce que** le plastifiant est choisi dans le groupe constitué par les esters d'acides aliphatiques dicarboxyliques, les esters d'acides 1,4 benzène dicarboxyliques, les benzoates, les trimellitates, les phosphates et les méta et/ou paraphtalates seuls ou en mélanges.

3. Plastisol selon la revendication 1, **caractérisé en ce que** le plastifiant est choisi dans le groupe constitué par le bis(2-éthylhexyl)-1,4-benzène dicarboxylate, le dipropylène glycoldibenzoate, le diisononyl-1,2-cyclohexanedicarboxylate, le di-(2éthylhéxyl)-adipate, le 2-éthylhexyl diphényl phosphate, le trioctyl trimellitate et un cyclohexane carboxylique acide, seuls ou en mélange.

4. Plastisol selon la revendication 1, **caractérisé en ce que** le plastifiant est choisi parmi les esters d'acide 1,4 benzène dicarboxylique.

5. Plastisol selon la revendication 1, **caractérisé en ce que** le plastifiant est le bis(2-éthylhexyl)-1,4-benzène dicarboxylate.

6. Plastisol selon l'une quelconque des revendications précédentes, **caractérisé en ce qu'**il comprend au moins
- de 15 à 60 % d'un matériau polymère chloré,
- de 10 à 30 % d'un plastifiant consistant en un ou plusieurs plastifiants non polymérique exempts d'orthophtalate,
- une charge ignifugeante constituée de 2 à 15 % d'hydrate métallique choisi parmi le trihydrate d'alumine et l'hydroxyde de magnésium, seuls ou en mélanges, et de 5 à 30 % de sel de zinc,
les pourcentages étant calculés par rapport au poids total du plastisol.

7. Plastisol selon l'une quelconque des revendications précédentes, **caractérisé en ce que** le polymère chloré est choisi parmi le polychlorure de vinyle, les PVC surchlorés, les polychlorures de vinylidène et les polyoléfines chlorées.

8. Plastisol selon l'une quelconque des revendications précédentes, **caractérisé en ce que** les sels de zinc sont choisis parmi les sels hydratés et non hydratés.

9. Plastisol selon la revendication 8, **caractérisé en ce que** les sels de zinc sont choisis dans le groupe constitué par le stannate de zinc, l'hydroxystannate de zinc et le borate de zinc.

10. Plastisol selon l'une quelconque des revendications précédentes, **caractérisé en ce que** le rapport pondéral entre l'hydrate métallique et le sel de zinc est d'environ 2 pour 7, de préférence 1 pour 3.

11. Fil ignifugé enduit par un plastisol selon l'une quelconque des revendications 1 à 10.

12. Fil constitué d'un fil continu obtenu par filature de fibres en un matériau organique ou inorganique ou de fibres naturelles et d'un plastisol selon l'une quelconque des revendications 1 à 10.

13. Fil selon la revendication 12, **caractérisé en ce que** le matériau inorganique ou organique constitutif des fibres du fil est choisi dans le groupe constitué par le verre ou la silice.

14. Procédé de fabrication d'un fil selon les revendications 11 à 13, **caractérisé en ce que** l'on soumet un fil continu obtenu par filature de fibres en un matériau organique ou inorganique à un procédé d'enduction par une couche ou deux couches, d'un plastisol selon les revendications 1 à 10.

15. Structure textile, par exemple tissu, **caractérisée en ce qu'**elle est susceptible d'être obtenue à partir d'au moins un fil selon l'une des revendications 11 à 13.

16. Ecran de protection solaire comprenant au moins une structure textile selon la revendication 15.

17. Utilisation pour l'enduction filamentaire, pour la fabrication de stores de protection solaire d'un plastisol ignifugé selon l'une quelconque des revendications 1 à 10.

## Patentansprüche

1. Flammhemmendes Plastisol, umfassend ein bleifreies chloriertes Polymermaterial, **dadurch gekennzeichnet, dass** es mindestens Folgendes umfasst:
- 15 bis 60 % eines chlorierten Polymermaterials,
- 10 bis 30 % eines orthophthalatfreien, nicht polymeren Weichmachers,
- einen antimonfreien flammhemmenden Füllstoff, umfassend 2 bis 15 % Metallhydrat, ausgewählt aus Aluminiumoxidtrihydrat und Magnesiumhydroxid, allein oder in Gemischen, und 5 bis 30 % Zinksalz,
wobei sich die Prozentsätze auf das Gesamtgewicht des Plastisols beziehen.

2. Plastisol nach dem vorherigen Anspruch, **dadurch gekennzeichnet, dass** der Weichmacher ausgewählt ist aus der Gruppe, bestehend aus Estern aliphatischer Dicarbonsäuren, Estern von 1,4-Benzoldicarbonsäuren, Benzoaten, Trimellitaten, Phosphaten und Meta- und/oder Paraphthalaten allein oder in Gemischen.

3. Plastisol nach Anspruch 1, **dadurch gekennzeichnet, dass** der Weichmacher ausgewählt ist aus der Gruppe, bestehend aus bis(2-Ethylhexyl)-1,4-benzoldicarboxylat, Dipropylenglycoldibenzoat, Diisononyl-1,2-cyclohexandicarboxylat, Di-(2-ethylhexyl)-adipat, 2-Ethylhexyldiphenylphosphat, Trioctyltrimellitat und einer Cyclohexancarbonsäure, allein oder im Gemisch.

4. Plastisol nach Anspruch 1, **dadurch gekennzeichnet, dass** der Weichmacher ausgewählt ist aus 1,4-Benzoldicarbonsäureestern.

5. Plastisol nach Anspruch 1, **dadurch gekennzeichnet, dass** der Weichmacher bis(2-Ethylhexyl)-1,4-benzoldicarboxylat ist.

6. Plastisol nach einem der vorherigen Ansprüche, **dadurch gekennzeichnet, dass** es ferner Folgendes umfasst:
- 15 bis 60 % eines chlorierten Polymermaterials,
- 10 bis 30 % eines Weichmachers, der aus einem oder mehreren orthophthalatfreien, nicht polymeren Weichmachern besteht,
- einen feuerhemmenden Füllstoff, der aus 2 bis 15 % Metallhydrat, ausgewählt aus Aluminiumoxidtrihydrat und Magnesiumhydroxid, allein oder in Gemischen, und 5 bis 30 % Zinksalz besteht,
wobei sich die Prozentsätze auf das Gesamtgewicht des Plastisols beziehen.

7. Plastisol nach einem der vorherigen Ansprüche, **dadurch gekennzeichnet, dass** das chlorierte Polymer ausgewählt ist aus Polyvinylchlorid, superchloriertem PVC, Polyvinylidenchlorid und chlorierten Polyolefinen.

8. Plastisol nach einem der vorherigen Ansprüche, **dadurch gekennzeichnet, dass** die Zinksalze ausgewählt sind aus hydratisierten und nicht hydratisierten Salzen.

9. Plastisol nach Anspruch 8, **dadurch gekennzeichnet, dass** die Zinksalze ausgewählt sind aus der Gruppe, bestehend aus Zinkstannat, Zinkhydroxystannat und Zinkborat.

10. Plastisol nach einem der vorherigen Ansprüche, **dadurch gekennzeichnet, dass** das Gewichtsverhältnis von Metallhydrat zu Zinksalz etwa 2 zu 7, vorzugsweise 1 zu 3, ist.

11. Flammhemmendes Garn, das mit einem Plastisol nach einem der Ansprüche 1 bis 10 beschichtet ist.

12. Garn, bestehend aus einem Endlosgarn, das durch Spinnen von Fasern aus einem organischen oder anorganischen Material oder von Naturfasern erlangt wird, und einem Plastisol nach einem der Ansprüche 1 bis 10.

13. Garn nach Anspruch 12, **dadurch gekennzeichnet, dass** das anorganische oder organische Material, das die Fasern des Garns bildet, ausgewählt ist aus der Gruppe, bestehend aus Glas oder Siliziumdioxid.

14. Verfahren zur Herstellung eines Garns nach den Ansprüchen 11 bis 13, **dadurch gekennzeichnet, dass** ein Endlosgarn, das durch Spinnen von Fasern aus einem organischen oder anorganischen Material erlangt wird, einem Verfahren unterzogen wird, bei dem es mit einer Schicht oder zwei Schichten eines Plastisols nach den Ansprüchen 1 bis 10 beschichtet wird.

15. Textile Struktur, z. B. Gewebe, **dadurch gekennzeichnet, dass** sie aus mindestens einem Garn nach einem der Ansprüche 11 bis 13 erlangt werden kann.

16. Sonnenschutzschirm, umfassend mindestens eine textile Struktur nach Anspruch 15.

17. Verwendung eines flammhemmenden Plastisols nach einem der Ansprüche 1 bis 10 zur Filamentbeschichtung, zur Herstellung von Sonnenschutzrollos.

## Claims

1. Flame-retardant plastisol comprising a chlorinated polymer material free of lead, **characterized in that** it comprises at least:
- from 15 to 60% of a chlorinated polymer material,
- from 10 to 30% of a non polymer plasticizer free of orthophtalate,
- a flame-retardant filler free of antimony comprising from 2 to 15% metal hydrate chosen from alumina trihydrate and magnesium hydroxide, alone or as mixtures, and from 5 to 30% of zinc salt,
the percentages being calculated with respect to the total weight of the plastisol.

2. Plastisol according to the preceding claims, **characterized in that** the plasticizer is chosen in the group formed by aliphatic dicarboxylic acid esters, 1,4-benzenedicarboxylic acid esters, benzoates, trimellitates, phosphates, and meta and/or paraphtalate alone or as mixtures.

3. Plastisol according to claim 1, **characterized in that** the plasticizer is chosen from the group consisting of bis(2-ethylhexyl)-1,4-benzendicarboxylate, dipropylene glycoldibenzoate, diisononyl-1,2-cyclohexanedicarboxylate, di-(2-ethylhexyl)-adipate, 2-ethylhexyl diphenyl phosphate, le trioctyl trimellitate and a cyclohexancarboxylic acid, alone or as a mixture.

4. Plastisol according to claim 1, **characterized in that** the plasticizer is chosen in the group formed by 1,4-benzenedicarboxylic acid esters.

5. Plastisol according to claim 1, **characterized in that** the plasticizer is bis(2-ethylhexyl) 1,4-benzenedicarboxylate.

6. Plastisol according to any one of the preceding claims, **characterized in that** it comprises at least:
- from 15 to 60% of a chlorinated polymer material,
- from 10 to 30% of a plasticizer consisting of one or a mixture of non polymer plasticizers free of orthophtalate,
- a flame-retardant filler consisting of 2 to 15% metal hydrate chosen from alumina trihydrate and magnesium hydroxide, alone or as mixtures, and 5 to 30% zinc salt,
the percentages being calculated with respect to the total weight of the plastisol.

7. Plastisol according to any one of the preceding claims, **characterized in that** the chlorinated polymer is chosen from polyvinyl chloride, superchlorinated PVCs, polyvinylidene chlorides and chlorinated polyolefins.

8. Plastisol according to anyone of the preceding claims **characterized in that** the zinc salts are chosen from hydrated or non-hydrated salts.

9. Plastisol according to claim 8, **characterized in that** the zinc salts are chosen from the group formed by zinc stannate, zinc hydroxystannate and zinc borate.

10. Plastisol according to any one of the preceding claims, **characterized in that** the weight ratio between the metal hydrate and the zinc salt is about 2:7 and preferably 1:3.

11. Flame-retardant yarn coated with a plastisol according to any one of claim 1 to 10.

12. Yarn made of a continuous yarn obtained by spinning fibres, made of an organic or inorganic material or of natural fibres, and a plastisol according to any one of Claims 1 to 10.

13. Yarn according to Claim 12, **characterized in that** the inorganic or organic material of which the fibres of the yarn are made is chosen from the group formed by glass and silica.

14. Process for manufacturing a yarn according to Claims 11 to 13, **characterized in that** a continuous yarn obtained by spinning fibres made of an organic or inorganic material is subjected to a process of coating with one or two coats of a plastisol according to Claims 1 to 10.

15. Textile structure, for example a fabric, **characterized in that** it may be obtained from at least one yarn according to one of Claims 11 to 13.

16. Sun blind comprising at least one textile structure according to Claim 15.

17. Use for yarn coating, for the manufacture of sun protection blinds, of a flame-retardant plastisol according to any one of claims 1 to 10.
